# FASCICULE DE BREVET EUROPEEN

(11) **EP 0 929 839 B1**
(45) Date de publication et mention de la délivrance du brevet: **21.11.2001**
(21) Numéro de dépôt: 97943018.8
(22) Date de dépôt: 29.09.1997
(51) Int. Cl.: G02F 1/136, G02F 1/1335

(54) **ECRAN DE VISUALISATION A MATRICE ACTIVE**
AKTIVMATRIX-FLÜSSIGKRISTALLANZEIGE
DISPLAY SCREEN WITH ACTIVE MATRIX

(30) Priorité: 07.10.1996 FR 9612171
(43) Date de publication de la demande: 21.07.1999
(73) Titulaire: THOMSON-LCD, 75800 Paris (FR)
(72) Inventeur: KRETZ, Thierry, F-92648 Boulogne (FR); LEBRUN, Hugues, F-92648 Boulogne (FR)
(74) Mandataire: Ruellan-Lemonnier, Brigitte
(86) Numéro de dépôt international: FR9701711
(87) Numéro de publication internationale: WO9815873

(56) Documents cités:
- EP-A- 0 537 853
- EP-A- 0 664 473
- EP-A- 0 682 282
- EP-A- 0 691 565
- EP-A- 0 699 939
- EP-A- 0 708 356
- WO-A-93/07529

## Description

La présente invention concerne les écrans de visualisation à matrice active et plus particulièrement une structure de pixels pour ces écrans permettant d'obtenir un taux d'ouverture élevé.

De manière connue, un écran de visualisation à matrice active est constitué d'un certain nombre de cellules à cristal liquide ou pixels disposés selon un réseau matriciel. Les cellules sont formées à partir de deux substrats, de préférence en verre, collés l'un à l'autre par un joint périphérique qui ménage une cavité de faible épaisseur dans laquelle se trouve le cristal liquide. Le premier substrat est revêtu d'une contre-électrode tandis que le second substrat contient les électrodes de pixel et dans le cas des écrans à matrice active, les dispositifs de commande à l'état solide disposés entre les électrodes auxquelles ils sont connectés ainsi qu'un réseau de lignes de sélection et de lignes de données disposées selon deux directions différentes.

Les électrodes de pixel des écrans à cristaux liquides sont réalisées en un matériau conducteur transparent tel que l'oxyde d'indium et d'étain (ITO). Toutefois, les lignes de sélection, les lignes de données et les dispositifs de commande à l'état solide qui sont utilisés pour connecter les lignes de données aux électrodes de pixel sont réalisées en un matériau conducteur opaque. D'autre part pour améliorer le contraste de l'écran, on dépose le plus souvent un masque opaque ou "black matrix" sur les parties non commandées du pixel. Or, lorsque l'on réduit la taille des pixels pour limiter les coûts de fabrication, les éléments opaques de l'écran gardent approximativement la même taille. Ceci joue donc sur le taux d'ouverture ou OAR qui est défini comme la surface transparente du panneau divisée par la surface totale. Ainsi dans les écrans de visualisation haute densité tels que les écrans utilisés en projection, les éléments opaques de l'écran peuvent occuper plus de 70% de la surface totale laissant seulement une surface transparente d'environ 30%. Il en résulte une perte de luminosité très importante et une détérioration de la qualité de l'image. D'autre part, lorsque les électrodes de pixels présentent une petite taille, on remarque des effets de bord provoqués par les surfaces non planaires et des perturbations dûes au champ électrique. Ces effets de bord dégradent le contraste et entraînent un affichage non uniforme.

Pour remédier à cet inconvénient, on a proposé dans un article IEDM 93, Page 401 et suivantes, une nouvelle structure de pixel comportant une électrode transparente entre la ligne de données et l'électrode de pixel qui écrante le couplage capacitif entre la ligne de données et l'électrode de pixel et réduit les effets provoqués par le champ électrique transversal. Autres exemples sont connus de EP 0 682 282A.

La présente invention a pour objet une nouvelle structure de pixel permettant d'obtenir un taux d'ouverture optique très important avec des faibles pas de pixel. Cette nouvelle structure est particulièrement avantageuse lors de la fabrication d'écrans de visualisation à cristaux liquides à matrice active de petites dimensions nécessitant une résolution élevée combinée avec une transmission importante.

En conséquence la présente invention a pour objet un écran de visualisation à matrice active comme définie par la revendication 1.

Lorsque l'écran est commandé en inversion-lignes, les ouvertures sont réalisées entre deux électrodes de pixel adjacentes selon la direction des lignes de sélection. Lorsque l'écran est commandé en inversion-colonnes, les ouvertures sont réalisées entre deux électrodes de pixel adjacentes selon la direction des lignes de données.

De ce fait, aucun niveau métallique transparent ou non n'est présent entre les électrodes de pixel de polarité identique, ce qui évite la désorganisation des molécules de cristal liquide et donc des fuites de lumière importantes. Cette zone sans niveau métallique donne une région totalement transparente en polariseurs croisés quand les électrodes de pixel sont faiblement polarisées (< 2V) augmentant le taux d'ouverture optique ou OAR pour Open Aperture Ratio. Quand elles sont polarisées avec une tension supérieure à 2V, le contraste de la zone sans niveau métallique suit celui des pixels voisins.

Selon un premier mode de réalisation, le masque opaque appelé "black matrix" est réalisé par la ligne se trouvant entre les électrodes de pixel de polarité opposée.

Selon un autre mode de réalisation, un masque métallique opaque formant "black matrix" et écran de protection à la lumière est réalisé sur les lignes se trouvant entre les électrodes de pixel de polarité opposée et les dispositifs de commutation à l'état solide. Lorsque le dispositif de commutation à l'état solide est constitué par un transistor de commande du type grille dessous, une très bonne protection contre la lumière incidente est obtenue avec ce masque métallique opaque. De préférence, ce masque métallique opaque est connecté au plan de masse transparent qui écrante les champs électriques entre les lignes de sélection et les électrodes de pixel. De plus, ce masque métallique opaque, par l'intermédiaire du plan de masse, est adressé avec une tension continue négative de manière à perturber le moins possible le courant de fuite du transistor lorsque la ligne n'est pas sélectionnée.

Selon un autre mode de réalisation de la présente invention, lorsque le dispositif de commutation est constitué par un transistor du type grille dessus, le plan de masse est connecté à une tension égale à la tension de contre électrode. Toutefois, lorsque le dispositif de commutation est constitué par un transistor du type grille dessous, le plan de masse est connecté à une tension proche de la tension de blocage des transistors de commande.

Selon une autre caractéristique de la présente invention les lignes sont réalisées sous les électrodes de pixel. De ce fait, un espacement minimum entre les électrodes de pixel adjacentes dans toutes les directions de la matrice active peut être obtenu, cet espacement minimum étant défini par la résolution du système d'insolation utilisé pour la photolitographie. Ce type de réalisation permet donc d'obtenir des électrodes de commande présentant une forme rectangulaire.

Selon une autre caractéristique de la présente invention, dans le cas où les électrodes de pixel présentent un arrangement en delta, les lignes de données sont rectilignes, ce qui facilite la réalisation de tels écrans.

D'autres caractéristiques et avantages de la présente invention apparaîtront à la lecture de différents modes de réalisation d'un écran de visualisation à matrice active conforme à la présente invention, cette description étant faite avec référence aux dessins ci-annexés dans lesquels :
- la figure 1 est une vue en plan côté matrice active d'un écran de visualisation conforme à un premier mode de réalisation de la présente invention,
- la figure 2 est une vue en plan côté matrice active d'un second mode de réalisation d'un écran de visualisation conforme à la présente invention, et
- les figures 3a, 3b et 3c sont respectivement des vues en coupe selon AA', BB', CC' de l'écran représenté à la figure 2.

Pour simplifier la description dans les dessins, les mêmes éléments portent les mêmes références.

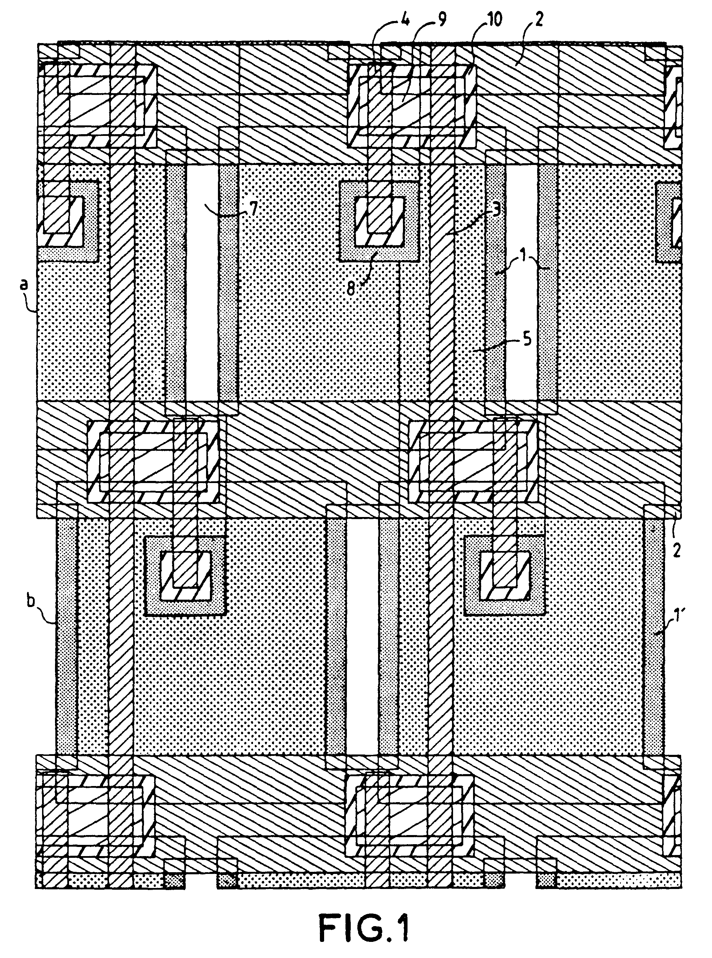

Sur la figure 1, on a représenté une vue en plan de dessus d'un écran de visualisation à cristaux liquides du type à matrice active, cet écran étant vu à travers la contre électrode qui, dans le mode de réalisation représenté, est constituée par de l'ITO ou de l'oxyde d'étain SnO₂ déposé sur du verre. Il est évident pour l'homme de l'art, que tout substrat connu peut être utilisé. D'autre part, la présente invention est décrite en se référant à une matrice active dans laquelle les dispositifs de commande en couche mince sont constitués par des transistors TFT du type grille dessous. Moyennant quelques modifications qui seront expliquées ci-après, la présente invention s'applique aussi à des dispositifs de commutation constitués par des transistors TFT du type grille dessus ou à d'autre dispositifs de commande ou commutation connus tels que des diodes.

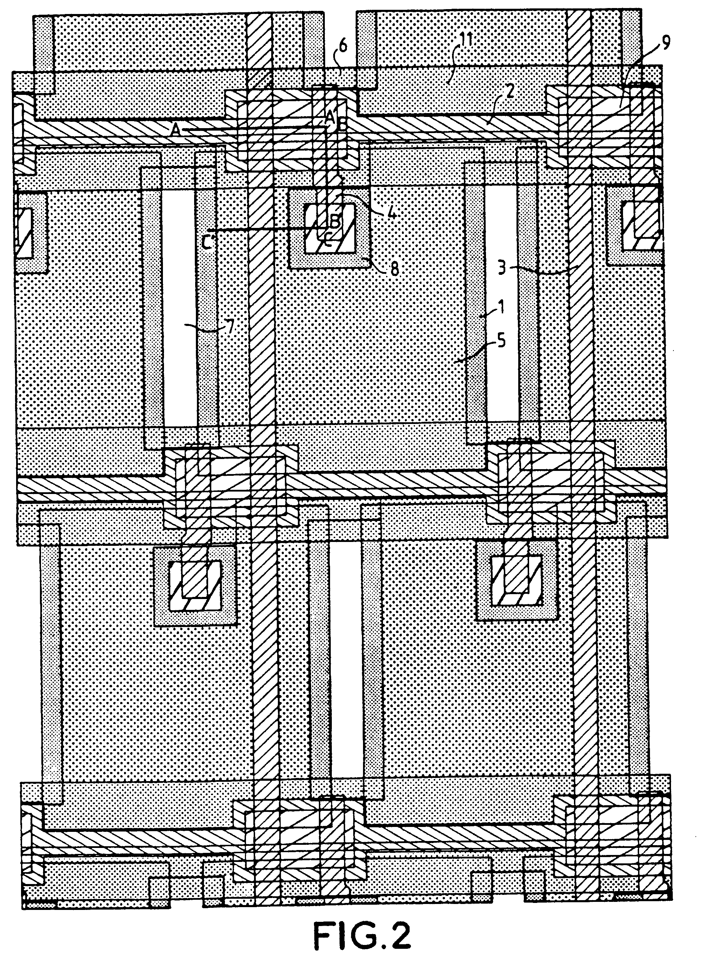

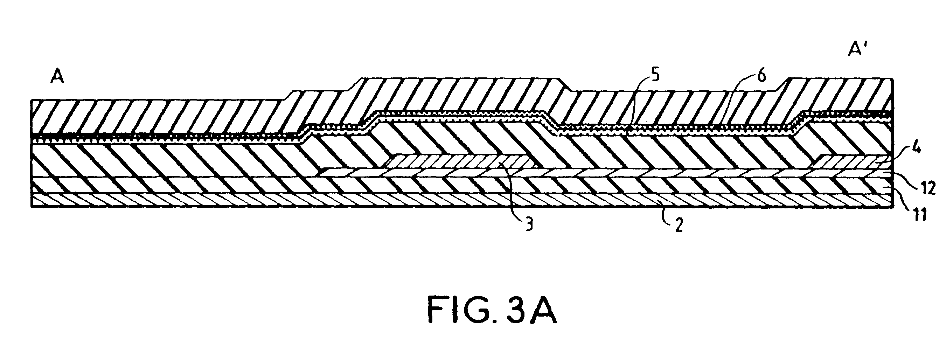

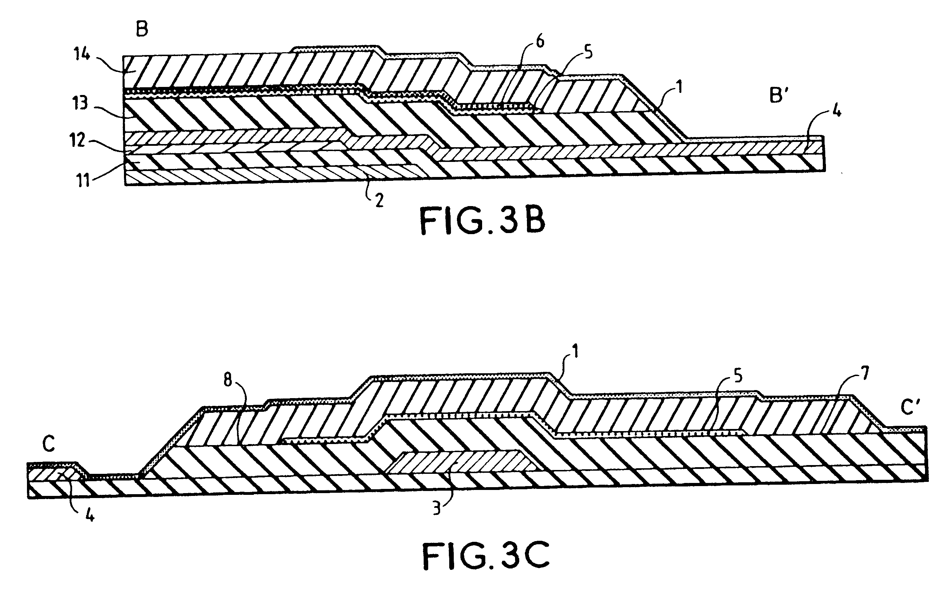

De plus, sur la figure 1 on a représenté pour les pixels un arrangement en delta ce qui signifie que chaque ligne de pixels est décalée d'un demi pixel comme représenté par les références a et b sur la figure 1. Sur les figures, la référence 1 désigne les électrodes de pixel. Ces électrodes sont, de manière connue, réalisées par un matériau conducteur transparent tel que de l'oxyde d'indium et d'étain ITO ou de l'oxyde d'étain SnO₂. Au dessous de l'électrode de pixel, on trouve un plan de masse transparent 5 du même type que le matériau de l'électrode de pixel. Comme cela sera expliqué de manière plus détaillée avec référence aux figures 3, le plan de masse est séparé des électrodes de pixel par un isolant. D'autre part, comme représenté sur les figures 1 et 2, la référence 2 désigne les lignes de sélection de l'écran matriciel, elles sont réalisées en un matériau métallique opaque tel que le titane, le chrome, le molybdène, l'aluminium ou le tungstène. La largeur de chaque ligne 2 est définie de manière à masquer les défauts optiques présents entre les électrodes de pixel adjacentes verticalement référencées 1 et 1' sur la figure 1, de manière à masquer les défauts optiques présents entre ces électrodes de pixel adjacentes verticalement lorsque l'écran est adressé en mode inversion de lignes. Dans le mode de réalisation représenté à la figure 1, les lignes de sélection 2 jouent le rôle de masque opaque ou "black matrix" permettant d'améliorer le contraste. D'autre part, sur les figures la référence 3 désigne les lignes de données ou colonnes. Ces lignes de données ou colonnes sont réalisées en un matériau conducteur tel que le titane, le chrome, le molybdène, l'aluminium ou le tungstène. Comme représenté sur les figures 1 et 2, les lignes de données 3 sont réalisées sous l'électrode de pixel et leur largeur peut être réduite au minimum selon les spécifications optiques et électriques imposées par la valve optique. D'autre part, comme représenté sur les figures 1 et 2, les électrodes de pixel forment une mosaïque rectangulaire 1 et 1' électriquement indépendant dont l'espacement entre pixels identiques dans toutes les directions est défini par la résolution du système d'insolation utilisé pour la photolitographie. Ces électrodes 1 et 1' sont positionnées au dessus de la "black matrix" qui est la ligne de sélection 2 dans la figure 1 ou le masque optique 11 dans la figure 2. Le recouvrement pixel "black matrix" est défini par la polarisation du plan de masse, l'espacement entre les électrodes de pixel et les propriétés des matériaux utilisés pour la mise en oeuvre du cristal liquide. Le dispositif de commande 9 est connecté à l'électrode de pixel 1 par l'intermédiaire d'une électrode de commande 4 réalisée en un matériau métallique conducteur identique au matériau de la colonne 3. Pour réaliser la connexion, une fenêtre 8 est ouverte dans le plan de masse 5, comme représenté sur les figures 1 et 2. D'autre part conformément à la présente invention, le plan de masse 5 est également évidé entre les électrodes de pixel adjacentes 1 selon une direction horizontale et qui présente des polarités identiques lorsque l'écran est adressé en mode inversion de ligne. Cette partie évidée est référencée 7 sur les figures 1 et 2. De ce fait, on a éliminé dans cette zone tout niveau conducteur transparent ou non qui normalement désorganise les molécules de cristal liquide. Aussi, la zone 7 apparaît totalement transparente et peut donc être comptabilisée dans l'ouverture optique de l'élément d'image de manière à augmenter l'OAR.

Dans la figure 1, lorsque le dispositif de commande 9 est constitué par un élément actif sensible à la lumière, tel qu'un transistor en silicium amorphe hydrogéné, une pastille 10 en un matériau conducteur de densité optique élevée est délimitée au dessus, dans le cas d'un transistor du type grille dessous, de l'élément à masquer afin de le protéger contre la lumière incidente. Dans le cas d'un transistor étagé inverse, cette pastille 10 métallique opaque de protection est connectée au plan de masse transparent 5 qui est alors adressé avec une tension continue négative pour perturber le moins possible l'état bloqué de l'élément actif qui doit jouer son rôle d'interrupteur. Dans le mode de réalisation de la figure 1, les lignes de sélection 2 sont utilisées comme "black matrix" et de ce fait présentent une largeur de lignes importante. Ceci entraîne, des recouvrements importants au niveau ligne/colonne et ligne/électrode de pixel comme on peut le voir sur la figure 1. Ces recouvrements introduisent des couplages ligne/colonne et ligne/électrode de pixel non négligeables qui peuvent perturber la qualité de l'image affichée sur l'écran de visualisation. Pour réduire ces effets néfastes, on peut donc utiliser la pastille de protection ou "light shield" comme "black matrix". Ceci est représenté sur la figure 2. Dans ce cas, en effet, les lignes de sélection 2 peuvent présenter une largeur plus étroite au niveau interpixel. Cette largeur est ajustée pour adapter la capacité ligne/plan de masse en fonction du produit. Dans ce cas, le "black matrix" suivant la ligne de sélection est réalisé par un conducteur métallique opaque 11 remplaçant la pastille de protection 10 de la figure 1. On décrira maintenant avec référence aux figures 3a à 3c, les différentes couches utilisées pour réaliser l'écran de la figure 2. Comme représenté sur les figures 3a et 3b, sur le substrat en verre non représenté, est tout d'abord déposé une couche métallique utilisée pour réaliser la grille du transistor de commande, dans le cas d'un transistor du type grille dessous, et la ligne de sélection. Sur cette grille et cette ligne, a été déposée une couche 11 formant l'isolant de grille qui, de manière connue, peut être une couche de silice (SiO₂) ou de nitrure de silicium (SiN). Sur l'isolant de grille ont été déposées, dopées et gravées une couche en silicium amorphe hydrogénée 12 et une couche de silicium amorphe hydrogénée dopée de manière à réaliser la couche active, le drain et la source du transistor de commutation. Au dessus de la couche de silicium amorphe, a été déposée une autre couche métallique qui est gravée de manière à réaliser les colonnes ou lignes de données 3 et le métal source et drain du transistor comme représenté sur les différentes figures 3. Ensuite, conformément à la présente invention une couche d'isolant 13 est déposée au dessus de l'ensemble puis le plan de masse 5 réalisé en un matériau conducteur transparent tel que l'oxyde d'étain et d'indium ITO. Comme représenté sur les figures 3b et 3c, le plan de masse 5 est gravé de manière à ouvrir une fenêtre 8 au niveau de la connexion de l'électrode du métal source, drain avec l'électrode de pixel et aussi au niveau de l'espace inter électrodes de pixel référencé 7.

Conformément au mode de réalisation de la figure 2, un masque opaque 6 en métal conducteur est déposé au dessus du plan de masse 5 pour réaliser la "black matrix". Comme représenté sur les figures 3a, 3b et 3c, une couche 14 supplémentaire d'un matériau isolant est déposée au dessus du plan de masse et de l'écran. Cette couche 14 est gravée de manière à ouvrir une ouverture entre le métal source, drain 4 et la couche conductrice transparente permettant de réaliser l'électrode de pixel 1. Celle ci est ensuite déposée et gravée sur l'ensemble. Ainsi, conformément à la présente invention, un plan de masse transparent 5 est interposé entre le réseau formé par les lignes de sélection 2 et les lignes de données 3, les éléments de commande 9 et les électrodes de pixel 1 pour écranter les couplages électrodes de pixel-colonnes 3 et électrodes de pixel-lignes 2 qui détériorent la qualité de l'image. L'isolement entre le plan de masse 5 et la matrice active constituée par les colonnes 3, les lignes 2 et les éléments de commande 9 ainsi que les électrodes de commande 1 des points-image est assuré à l'aide des couches isolantes 13 et 14 interposées entre les différents niveaux conducteurs. La couche isolante entre le plan de masse 5 et les électrodes de commande 4 peut être un matériau de planarisation du type SOG de manière à éliminer les différences de marches qui introduisent des effets optiques difficilement contrôlables. Sur les figures 1 et 2, on a représenté un écran adressé en mode inversion ligne pour lequel les électrodes de pixel d'une même ligne sont de polarités identiques alors qu'entre lignes directement voisines, les polarités sont inversées. La même structure peut être utilisée pour un écran travaillant en inversion colonne. Dans ce cas, les électrodes de pixel adjacentes horizontalement sont de polarités opposées alors que les électrodes de pixels adjacentes verticalement sont de polarités identiques. Il est donc nécessaire de masquer la zone interpixel suivant les colonnes à l'aide d'un "black matrix" qui est dans cette variante la colonne elle-même alors que la ligne passe sous l'électrode de pixel. Dans ce cas, en fait, on réalise une rotation à 90° de l'écran.

Selon une autre variante, le masque optique est déposé sur la contre électrode. D'autre part, dans le cas d'écrans à filtres colorés, la zone entre pixels de même polarité est masquée à l'aide d'un masque optique appelé "black matrix" disposé sur la contre électrode pour éliminer le "cross color".

La présente invention est utilisée principalement pour la fabrication d'écrans plats à matrice active à cristaux liquides, soit monochromes, soit couleurs. Les principales applications sont les dispositifs de projection ou de rétroprojection, les moniteurs de petite taille faisant intervenir des valves de petites dimensions nécessitant une ouverture optique élevée etc. La présente invention présente un certain nombre d'avantages tels que mentionnés ci-après.

Premièrement, aucun niveau métallique polarisé n'est disposé entre les électrodes de pixels de polarisations identiques. De ce fait, les molécules de cristal liquide dans cette région interpixel voient donc uniquement le champ électrique présent entre les deux électrodes de pixels adjacentes. Cette zone apparaît donc totalement transparente et peut donc être comptabilisée dans le taux d'ouverture optique du point image. De préférence, pour éviter les fuites de lumière trop importantes dans cette région interpixel, l'espacement entre électrodes de pixel doit être inférieur ou égal à l'épaisseur de la cellule. D'autre part, dans le cas d'une valve à filtres colorés, pour éviter les mélanges de couleurs qui peuvent engendrés des écarts de chrominance importants entre la couleur affichée et celle désirée, il est préférable de disposer un masque optique entre pixels à moins que l'alignement filtres colorés/électrodes de commande soit maîtrisé à mieux que deux micromètres dans le cadre d'une cellule de 4,5 micromètres d'épaisseur et d'un espacement interpixel de 4 micromètres.

Deuxièmement, lorsque l'élément de commande est constitué par un transistor du type grille dessus, la tension du plan de masse qui est disposé au dessus du transistor peut être fixée à la tension de la contre-électrode et la largeur du "black matrix" nécessaire pour masquer les défauts optiques est déterminée pour cette tension dite d'équilibre. Par contre, dans le cas d'un transistor de type grille dessous, la tension du plan de masse est maintenue à une tension proche de la tension de blocage des transistors de commande. Le champ électrique entre les électrodes de pixel et le plan de masse est donc plus élevé. Par conséquent, selon les directions de frottement, la largeur du "black matrix" peut être plus ou moins importante que celle déterminée pour le cas d'une tension de plan de masse égale à la tension de contre-électrode.

Troisièmement, dans le cas d'un arrangement en delta tel que représenté sur les figures 1 et 2, les lignes de données ou colonnes traversent verticalement les électrodes de pixel sans tenir compte de leur disposition, ce qui facilite grandement la réalisation de l'écran.

Quatrièmement, la taille du dispositif de commande n'affecte pas la largeur du "black matrix". Cette dernière est imposée par la précision d'alignement du dispositif d'insolation utilisé pour les étapes de photolitographie, la résolution de ce dispositif, les dispersions de surgravure, le chevauchement minimum entre le "black matrix" et l'électrode de pixel pour masquer les fuites de lumière issues des défauts électrooptiques.

## Revendications

1. Ecran de visualisation à matrice active comportant :
- des premier et second substrats transparents disposés sensiblement parallèlement l'un à l'autre avec des surfaces en regard,
- un matériau à cristal liquide compris entre lesdites surfaces,
- au moins une contre-électrode recouvrant la surface du premier substrat,
- la surface du second substrat supportant des électrodes de pixel (1, 1') disposées en structure matricielle (en lignes et en colonnes), des lignes de données (3) disposées selon une première direction (colonnes ou lignes), des lignes de sélection (2) disposées selon une seconde direction (lignes ou colonnes) croisant la première direction, des dispositifs de commutation (9) à l'état solide pour connecter électriquement les lignes de données aux électrodes de pixel, les électrodes de pixel se trouvant dans un premier plan alors que les lignes de données, les lignes de sélection et les dispositifs de commutation se trouvent dans au moins un deuxième plan espacé du premier plan,
- un plan de masse (5) constitué d'une couche transparente et conductrice se trouvant entre les deux plans, le plan de masse comportant des fenêtres (8) pour connecter chaque électrode de pixel (1,1') au dispositif de commutation correspondant (4,9),
**caractérisé en ce que** le plan de masse comporte de plus des parties évidées (7) formant une zone transparente non-conductrice, réalisées dans les parties du plan de masse (5) se trouvant entre deux électrodes de pixel (1), adjacentes selon la première ou seconde direction.

2. Ecran selon la revendication 1, **caractérisé en ce que**, lorsqu'il est commandé en inversion-lignes, les parties évidées (7) sont réalisées entre deux électrodes de pixel adjacentes (1, 1) selon la direction des lignes de sélection (2).

3. Ecran selon la revendication 1, les parties évidées (7) sont réalisées entre deux électrodes de pixel adjacentes (1, 1') selon la direction des lignes de données (3).

4. Ecran selon l'une quelconque des revendications 1 à 3, **caractérisé en ce que** l'espacement entre électrodes de pixel (1, 1') est inférieur ou égal à l'épaisseur de l'écran formé des deux substrats et du matériau à cristal liquide.

5. Ecran selon la revendication 3, **caractérisé en ce qu'**un masque opaque appelé « black matrix » est réalisé par les lignes de données se trouvant entre les électrodes de pixel.

6. Ecran selon la revendication 2, **caractérisé en ce qu'**un masque opaque appelé « black matrix » est réalisé par les lignes de sélection se trouvant entre les électrodes de pixel.

7. Ecran selon l'une quelconque des revendications 1, 2 et 4, **caractérisé en ce qu'**un masque métallique opaque formant « black matrix » et écran de protection à la lumière est réalisé au-dessus des lignes de sélection et des dispositifs de commutation à l'état solide.

8. Ecran selon l'une quelconque des revendications 1, 3 et 4, **caractérisé en ce qu'**un masque métallique opaque formant « black matrix » et écran de protection à la lumière est réalisé au-dessus des lignes de données et des dispositifs de commutation à l'état solide.

9. Ecran selon l'une quelconque des revendications 1, 2, 4 et 7, **caractérisé en ce que** les lignes de données sont réalisées sous les électrodes de pixel.

10. Ecran selon l'une quelconque des revendications 1, 3, 4 et 8, **caractérisé en ce que** les lignes de sélection sont réalisées sous les électrodes de pixel.

11. Ecran selon l'une quelconque des revendications 1 à 10, **caractérisé en ce que**, lorsque le dispositif de commutation est constitué par un transistor du type grille dessus, le plan de masse est connecté à une tension égale à la tension de contre-électrode.

12. Ecran selon l'une quelconque des revendications 1 à 10, **caractérisé en ce que**, lorsque le dispositif de commutation est constitué par un transistor du type grille dessous, le plan de masse est connecté à une tension proche de la tension de blocage des transistors de commutation.

13. Ecran selon la revendication 1, **caractérisé en ce que**, dans le cas d'inversion-lignes et lorsque les électrodes de pixel présentent un arrangement en delta, les lignes de données sont rectilignes.

14. Ecran selon l'une quelconque des revendications 1, 3, 6, 8 et 10, **caractérisé en ce que**, lorsqu'il fonctionne en inversion-colonnes, toutes les électrodes de pixel connectées à une ligne de données ont la même polarité alors que deux électrodes de pixel adjacentes connectées à la même ligne de sélection ont des polarités inverses, et **en ce que** dans ce cas, le « black matrix » étant disposé sous les lignes de données, il n'y a pas de métal dans l'espace entre électrodes de pixel de même polarité.

15. Ecran selon l'une quelconque des revendications 1 à 14, **caractérisé en ce que** le masque optique est disposé sur la contre-électrode.

## Patentansprüche

1. Wiedergabeschirm mit einer aktiven Matrix mit:
- einem ersten und einem zweiten transparenten Substrat, die im wesentlichen parallel zueinander mit einander gegenüberstehenden Oberflächen angeordnet sind,
- einem Material aus Flüssigkristall zwischen den Oberflächen,
- wenigstens einer die Oberfläche des ersten Substrats bedeckenden Gegenelektrode,
- wobei die Oberfläche des zweiten Substrats in einem matrixartigen Aufbau (in Reihen und Spalten) angeordnete Pixelelektroden (1,1'), in einer ersten Richtung (Spalten oder Reihen) angeordnete Datenleitungen (3), in einer zweiten Richtung (Reihen oder Spalten) angeordnete Auswahlleitungen (2), die die erste Richtung kreuzen, Festkörper-Umschalteinheiten (9) zum elektrischen Verbinden der Datenleitungen mit den Pixelelektroden trägt, die Pixelelektroden sich in einer ersten Ebene befinden, während die Datenleitungen, die Auswahlleitungen und die Umschalteinheiten sich wenigstens in einer zu der ersten Ebene beabstandeten zweiten Ebene befinden,
- einer Masseebene (5) aus einer transparenten und leitenden Schicht, die sich zwischen den beiden Ebenen befindet, wobei die Masseebene Fenster (8) zur Verbindung jeder Pixelelektrode (1, 1') mit der entsprechenden Umschalteinheit (4, 9) enthält,
**dadurch gekennzeichnet, daß** die Masseebene außerdem ausgesparte Teile (7) enthält, die einen transparenten, nicht-leitenden Bereich bilden und in den Teilen der Masseebene (5) ausgebildet sind, die sich zwischen zwei entlang der ersten oder der zweiten Richtung angrenzenden zwei Pixelelektroden (1) befindet.

2. Schirm nach Anspruch 1, **dadurch gekennzeichnet, daß** dann, wenn er mit Zeileninvertierung gesteuert ist, die ausgesparten Teile (7) zwischen zwei angrenzenden Pixelelektroden (1, 1) entlang der Richtung der Auswahlleitungen (2) ausgebildet sind.

3. Schirm nach Anspruch 1, **dadurch gekennzeichnet, daß** die ausgesparten Teile (7) zwischen zwei in Richtung der Datenleitungen (3) angrenzenden Pixelelektroden (1,1') ausgebildet sind.

4. Schirm nach einem der Ansprüche 1 bis 3, **dadurch gekennzeichnet, daß** der Abstand zwischen den Pixelelektroden (1,1') kleiner oder gleich der Dicke des durch die beiden Substrate und das Flüssigkristallmaterial gebildeten Schirms ist.

5. Schirm nach Anspruch 3, **dadurch gekennzeichnet, daß** eine mit "black matrix" bezeichnete opake Maske durch Datenleitungen gebildet ist, die sich zwischen den Pixelelektroden befinden.

6. Schirm nach Anspruch 2, **dadurch gekennzeichnet, daß** eine mit "black matrix" bezeichnete opake Maske durch Auswahlleitungen gebildet ist, die sich zwischen den Pixelelektroden befinden.

7. Schirm nach einem der Ansprüche 1, 2 und 4, **dadurch gekennzeichnet, daß** eine opake metallische Maske, die eine "black matrix" und einen Schutzschirm gegen Licht bildet, über den Auswahlleitungen und den Festkörper-Umschalteinheiten ausgebildet ist.

8. Schirm nach einem der Ansprüche 1, 3 und 4, **dadurch gekennzeichnet, daß** eine metallische opake Maske, die eine "black matrix" und einen Schutzschirm gegen Licht bildet, über den Datenleitungen und den Festkörper-Umschalteinheiten ausgebildet ist.

9. Schirm nach einem der Ansprüche 1, 2, 4 und 7, **dadurch gekennzeichnet, daß** die Datenleitungen unter den Pixelelektroden ausgebildet sind.

10. Schirm nach einem der Ansprüche 1, 3, 4 und 8, **dadurch gekennzeichnet, daß** die Auswahlleitungen unter den Pixelelektroden ausgebildet sind.

11. Schirm nach einem der Ansprüche 1 bis 10, **dadurch gekennzeichnet, daß** dann, wenn die Umschalteinheit durch einen Transistor vom Typ grille dessous gebildet ist, die Masseebene mit einer Spannung verbunden ist, die gleich der Spannung der Gegenelektrode ist.

12. Schirm nach einem der Ansprüche 1 bis 10, **dadurch gekennzeichnet, daß** dann, wenn die Umschalteinheit durch Transistoren vom Typ grille dessous gebildet ist, die Masseebene mit einer Spannung verbunden ist, die in der Nähe der Sperrspannung der Umschalttransistoren liegt.

13. Schirm nach Anspruch 1, **dadurch gekennzeichnet, daß** im Falle einer Zeileninvertierung und, wenn die Pixelelektroden eine Anordnung in Deltaform aufweisen, die Datenleitungen geradlinig sind.

14. Schirm nach einem der Ansprüche 1, 3, 6, 8 und 10, **dadurch gekennzeichnet, daß** dann, wenn er mit Spalteninvertierung arbeitet, alle mit einer Datenzeile verbundenen Pixelelektroden dieselbe Polarität haben, während zwei mit derselben Auswahlleitung verbundene, angrenzende Pixelelektroden entgegengesetzte Polaritäten haben, und daß in dem Fall, wo die "black matrix" unter den Datenleitungen liegt, kein Metall in dem Zwischenraum zwischen den Pixelelektroden derselben Polarität liegt.

15. Schirm nach einem der Ansprüche 1 bis 14, **dadurch gekennzeichnet, daß** die optische Maske auf der Gegenelektrode angeordnet ist.

## Claims

1. Active-matrix display screen comprising:
- first and second transparent substrates placed more or less parallel to each other with facing surfaces,
- a liquid-crystal material lying between the said surfaces,
- at least one counter electrode covering the surface of the first substrate,
- the surface of the second substrate supporting pixel electrodes (1, 1') arranged in a matrix structure (in rows and columns), data lines (3) lying in a first direction (columns or rows), selection lines (2) lying in a second direction (rows or columns) which intersects the first direction, solid-state switching devices (9) for electrically connecting the data lines to the pixel electrodes, the pixel electrodes lying in a first plane while the data lines, the selection lines and the switching devices lie in at least a second plane at some distance from the first plane,
- an earth plane (5) which consists of a transparent and conductive layer lying between the two planes, the earth plane having windows (8) for connecting each pixel electrode (1, 1') to the corresponding switching device (4, 9),
**characterized in that** the earth plane has in addition cut-away parts (7), forming a non-conducting transparent zone, made in those part of the earth plane (5) lying between two adjacent pixel electrodes (1), in the first or second direction.

2. Screen according to Claim 1, **characterized in that**, when it is operated in line-inversion mode, the cut-away parts (7) are produced between two adjacent pixel electrodes (1, 1) in the direction of the selection lines (2).

3. Screen according to Claim 1, the cut-away parts (7) are produced between two adjacent pixel electrodes (1, 1') in the direction of the data lines (3) [sic].

4. Screen according to any one of Claims 1 to 3, **characterized in that** the spacing between pixel electrodes (1, 1') is less than or equal to the thickness of the screen formed from the two substrates and the liquid-crystal material.

5. Screen according to Claim 3, **characterized in that** an opaque mask called a "black matrix" is produced by the data lines lying between the pixel electrodes.

6. Screen according to Claim 2, **characterized in that** an opaque mask called a "black matrix" is produced by the selection lines lying between the pixel electrodes.

7. Screen according to any one of Claims 1, 2 and 4, **characterized in that** an opaque metal mask forming a "black matrix" and a light-shielding screen is produced on top of the selection lines and of the solid-state switching devices.

8. Screen according to any one of Claims 1, 3 and 4, **characterized in that** an opaque metal mask forming a "black matrix" and a light-shielding screen is produced on top of the data lines and of the solid-state switching devices.

9. Screen according to any one of Claims 1, 2, 4 and 7, **characterized in that** the data lines are produced beneath the pixel electrodes.

10. Screen according to any one of Claims 1, 3, 4 and 8, **characterized in that** the selection lines are produced beneath the pixel electrodes.

11. Screen according to any one of Claims 1 to 10, **characterized in that**, when the switching device consists of a transistor of the top gate type, the earth plane is connected to a voltage equal to the counter-electrode voltage.

12. Screen according to any one of Claims 1 to 10, **characterized in that**, when the switching device consists of a transistor of the bottom gate type, the earth plane is connected to a voltage close to the turn-off voltage of the switching transistors.

13. Screen according to Claim 1, **characterized in that**, in the case of line inversion and when the pixel electrodes have a delta arrangement, the data lines are straight.

14. Screen according to any one of Claims 1, 3, 6, 8 and 10, **characterized in that**, when it operates in column-inversion mode, all the pixel electrodes connected to a data line have the same bias, while two adjacent pixel electrodes connected to the same selection line have reversed bias and **in that**, in this case, the "black matrix" being placed beneath the data lines, there is no metal in the space between pixel electrodes with the same bias.

15. Screen according to any one of Claims 1 to 14, **characterized in that** the optical mask is placed on the counter electrode.
